# EUROPEAN PATENT SPECIFICATION

(11) **EP 3 375 277 B1**
(45) Date of publication and mention of the grant of the patent: **08.06.2022**
(21) Application number: 18000241.2
(22) Date of filing: 12.03.2018
(51) Int. Cl.: A01G 9/02, A01G 9/029, A01G 22/05, A01G 9/04

(54) **TRAY FOR GROWING STRAWBERRIES**
SCHALE ZUM ZÜCHTEN VON ERDBEEREN
PLATEAU DE CULTURE DE FRAISES

(30) Priority: 13.03.2017 NL 1042300
(43) Date of publication of application: 19.09.2018
(73) Proprietor: Meteor Systems B.V., 4817 ZK Breda (NL)
(72) Inventor: Bastiaansen, Christiaan Adrianus Cornelis Antonius, 4879 NG Etten-Leur (NL)
(74) Representative: Griebling, Onno

(56) References cited:
- EP-A1- 1 657 185
- EP-A2- 1 459 620
- WO-A1-2012/033516
- DE-U1-202012 010 529
- DE-U1-202016 103 080

## Description

### FIELD OF THE INVENTION

The present invention relates to the growing of strawberries.

### BACKGROUND OF THE INVENTION

It is known that strawberry plants are multiplied by means of runners. At the end of the runner, at some distance from the parent plant, a new plant grows. The runner can grow further, and always there will emerge a new plant at some distance from the previous one.

In nature, the parent plant will be in soil, the runners will be laying on the soil, and the new plants can root where they come into being. If the parent plant is grown at a raised level, the runners will hang freely in the air.

If the grower is interested in the yield of strawberries, he will cut away the runners, in order to achieve that the energy of the parent plant will go into making fruit. If the grower is interested in multiplying the number of plants, he will at some moment cut off the new plants and place them in a pot filled with substrate. In such case, the existing leaves will form a reserve of nutrition for the young plant. After some time, possibly after first a resting period at lower temperature, the young plant will form roots and will make new leaf. The old leaves die, and must be removed, because otherwise they form a source of sickness and decay.

In the field of professional growing, it is usual to use trays with two rows of pots. The grower places the young plants into the little pots, with the roots directed inwards and the leaves directing outwards. In such case, the leaves hang over the edge of the tray. When it is time to remove the leaves, one can easily remove all the leaves by machine in a single pass by guiding a cutting apparatus along the longitudinal edges of the tray.

EP-1.459.620 discloses a plant tray with two rows of pots, having mutually perpendicular ridges to separate the pots.

### SUMMARY OF THE INVENTION

In such case, it is disadvantageous that the young plants are laying so to say "mirrored" on the trays. From the perspective of the grower, it is more convenient if all plants are laying in the same direction. It is then not possible, in the case of existing trays, to remove the leaves in a single pass by means of a machine, in any case not easily.

It is further disadvantageous that a tray has only two rows. It is more efficient if a tray has multiple rows. This is not possible in the case of the system of the existing trays.

An aim of the invention is to provide a growing tray for strawberries which eliminates the above-mentioned disadvantages, while it is still simply possible to remove the leaves in a single pass by means of a machine.

### BRIEF DESCRIPTION OF THE DRAWINGS

These and other aspects, features and advantages of the present invention will be further clarified by the following description of one or more exemplary embodiments with reference to the drawings, in which same reference numerals indicate same or similar parts, and in which indications "below/above", "higher/lower", "left/right" etc. relate exclusively to the orientation shown in the drawings, and in which:
figures 1A and 1B show perspective views of a part of a strawberry growing tray according to the present invention;
figure 2 is a schematic top view of the strawberry growing tray;
figure 3 is a schematic cross section according to line III-III in figure 2;
figure 4 is a schematic cross section according to line IV-IV in figure 2.

### DETAILED DESCRIPTION OF THE INVENTION

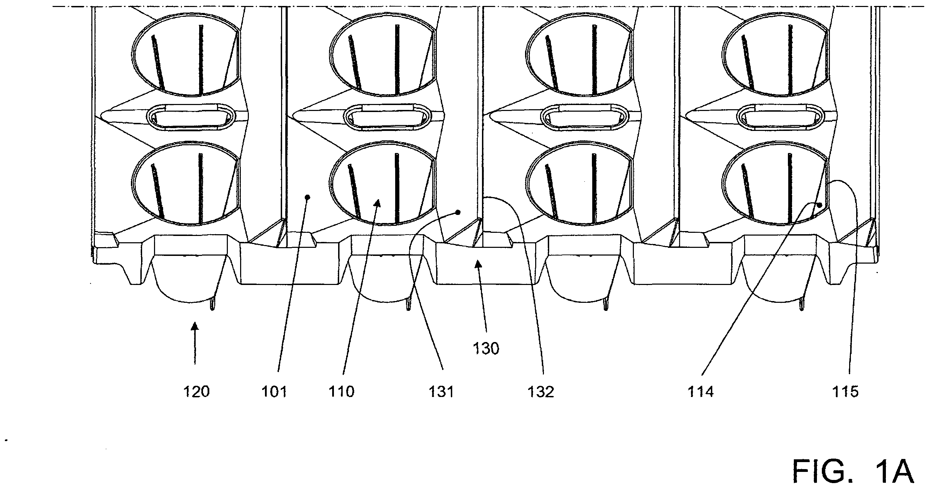

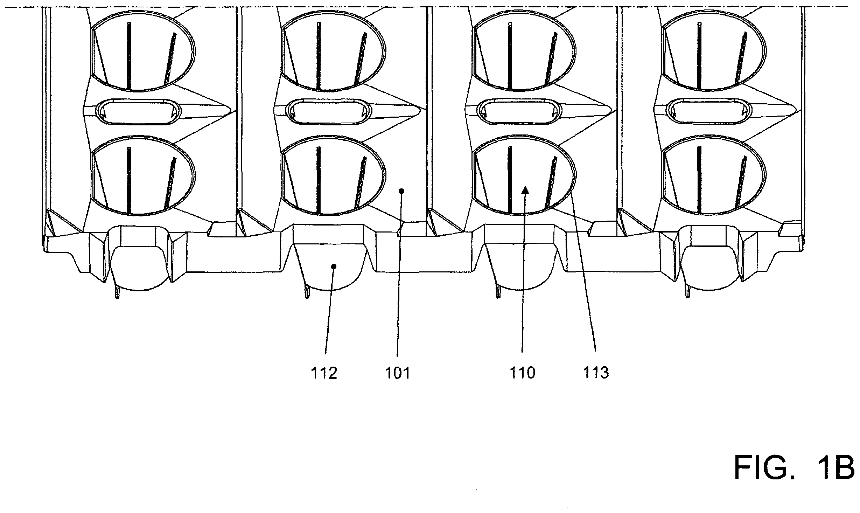

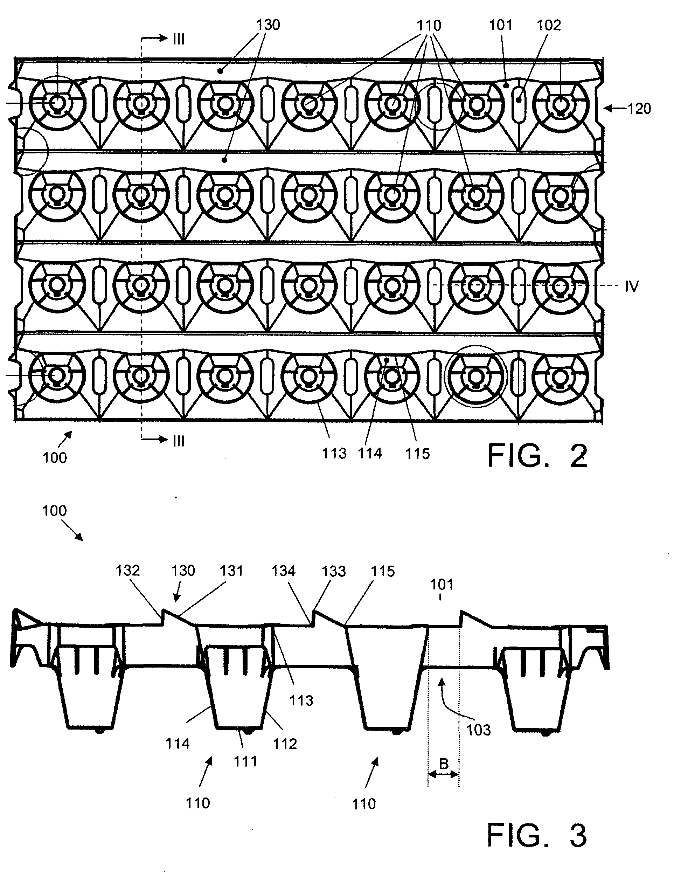

Figures 1A and 1B each show a perspective view of a part of a strawberry growing tray 100. Figure 2 is a schematic top view of the tray 100. Figure 3 is a schematic cross section according to line III-III.

Reference numeral 101 indicates a horizontal top surface. With respect to this top surface 101, the tray 100 has a plurality of cup-shaped recesses 110. Each cup-shaped recess 110 has a bottom 111 provided with one or multiple openings and a sidewall 112 with an upper edge 113 connecting to the top surface 101. The cup-shaped recess 110 is generally tapered, that is to say that its diameter measured at the bottom 111 is smaller than its diameter measured at the upper edge 113.

In the example shown, the tray 100 has four rows 120 of always six cup-shaped recesses 110, that hereinafter will simply be indicated as "cup". The direction of the rows will be indicated as length direction, and is horizontal in figure 2. The number of cups 110 in the length direction may be more or less than six. In each row, aerating openings 102 may be arranged in the upper surface 101 between the cups 110.

The direction transverse to the rows will be indicated as width direction, and is vertical in figure 2. The number of rows of cups 110 may be more or less than four; the present invention already comes into expression in the case of a tray with only a single row. In use, multiple trays may be arranged adjacent to each other, against each other, both in length direction and in width direction; when one places four one-row trays next to each other, the whole behaves in the same way as a single four-row tray.

According to the present invention, the tray 100 has adjacent to each row 120, a ridge 130 standing up from the upper surface 101 and directed in the length direction. Although the precise cross contour of the upstanding ridge 130 is not essential, the cross contour of the exemplary embodiment has a definite preference. In the preferred embodiment, the upstanding ridge 130 has a sawtooth-shaped cross contour, with a slanted side face 131 directed to the row 120 and a second side face 132 directed away from the row 120.

The slanted side face 131 makes an angle with the horizontal upper face 101 which may be chosen in the range from 20° to 70° and which may expediently be about 45°. At the location where the slanted side face 131 reaches the horizontal upper face 101, the slanted side face 131 preferably touches the upper edge 113 of the cups 110. In the preferred exemplary embodiment shown, the cups 110 have a truncated circle countour, with a flat sidewall part 114 and a straight upper edge part 115 that is a portion of the lower edge of the slanted side face 131.

The second side face 132 makes a large angle with the horizontal upper face 101, which angle preferably is equal to 90°. With a view to a manufacturing process in a mold, this angle may deviate a few degrees from 90°.

The second side face 132 meets the slanted side face 131 at an apex 133, and at its lower edge 134 it connects to the horizontal upper face 101. This lower edge 134 is lying at a distance B from the next adjacent row 120 of the cup-shaped recesses 110. The horizontal distance between this lower edge 134 and the upper edge 113 of the cups 110 of the adjacent row 120 is indicated with B in figure 3. This distance B is preferably chosen in the range of 1-3 cm, and is more preferably about 2 cm. The portion of the horizontal upper face 101 over this width is indicated as support face 103.

It is noted that all ridges 130 have the same orientation.

It is further noted that the number of ridges is equal to the number of rows. Thus, the tray is provided with a ridge 130 at one side edge and is free from such ridge at the opposite side edge.

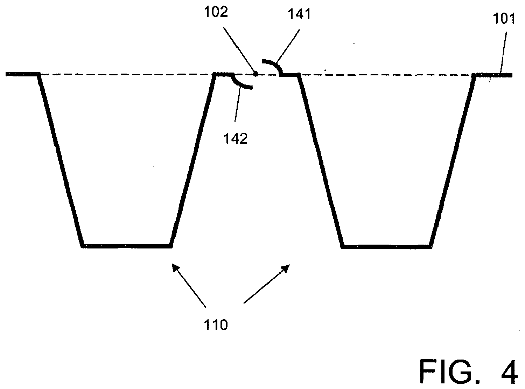

Figure 4 shows a schematic cross section of a portion of the tray 100 according to line IV-IV in figure 2, in other words perpendicular to the line III-III, in order to illustrate a detail of the aeration openings 102. Alongside the peripheral edge of each aeration opening 102, a spoiler 141, 142 is arranged in or to the horizontal upper face 101, that is to say a material part that projects outside the undisturbed upper surface 101. For the sake of clarity, the spoiler 141, 142 is shown exaggeratedly large.

It is possible that such spoiler is arranged at one side of the aeration opening 102; in the example shown, such spoiler is arranged along both sides of the aeration opening 102.

It is possible that such spoiler is implemented in the shape of a thickening of the horizontal upper face 101 or as a bent part of the horizontal upper face 101, or a combination hereof; in the example shown the spoiler is implemented in the shape of a bent part of the horizontal upper face 101.

It is possible that the spoiler has a flat shape, or a convex shape, or a concave shape.

It is possible that the spoiler extends above the undisturbed upper face 101, as in the example shown of the spoiler 141, at the right hand side, or below the undisturbed upper surface 101, such as in the example shown of the spoiler 142 at the left hand side. In case of two spoilers at both sides it is possible that the spoilers project to the same side or to opposite sides, as in the example shown.

The spoiler has an advantageous effect on the aeration of the plants. In principle, there will be a horizontal airflow along the horizontal upper face 101, above that surface and/or below that surface, but it is important that an exchange takes place from air above and below the face 101. Depending on the direction of the airflow, the spoiler will bite into the flow, or oppositely will have a suction effect by venturi action, and thus stimulate said exchange. The effect of such spoiler is also achieved in the case of a tray without the ridges 130.

The use of the tray 100 according to the present invention is as follows. The young plants are placed into the cups 110, wherein the leafstalks of a plant are always laid on the adjacent slanting side face 131 of the neighbouring ridge 130 and extend over the apex 133 thereof. When the moment has come that the old leaf must be removed, one can cut all leafstalks of all plant in the same row with a single movement. This can be done by machine. To this end, a clipping machine not shown for sake of simplicity has a pair of scissors with a lower beak and upper beak, which scissors are displaced along a ridge 130. Thereby, the lower beak rests on the support face 103, and projects into the space between that support face 103 and the stalks extending over the apex 133 of the ridge 130. The upper beak, which makes a clipping movement, extends over the stalks extending over the apex 133 of the ridge 130. In this case, the second side face 132 can serve as a guide face for the scissors offering support in transverse direction. In order to prevent that, when reaching a new tray, the scissors bump into the side edge the tray, the tray preferably and as shown is provided with a slanting run-in face for the support face 103 and or provided with a slanting run-in face for the second side face 132.

In a possible embodiment, the clipping machine is provided with multiple scissors adjacent to each other, at a mutual distance corresponding to the mutual distance between the ridges 130.

In a possible embodiment, the clipping machine is arranged for being capable of being operative in two directions. Thus, in a first pass in a first direction, the clipping machine can cut all stalks of a first row, and can cut all stalks of an adjacent row in a next pass in opposite direction.

Instead of a clipping machine, one can also use a cutting machine with a knife displacing itself along the second side face 132. In that case, this knife can slide or roll on the support face 103. The knife can also slide along the second side face 132, in which case this second side face 132 functions as cutting face.

It will be clear to a person skilled in the art that the invention is not limited to the exemplary embodiments discussed in the above, but that several variations and modifications are possible within the protective scope of the invention as defined in the attached claims. The ridges 130 are without interruptions and extend with constant contour over the entire length of the tray.

Even if certain features are mentioned in different dependent claims, the present invention also relates to an embodiment having these features in common. Even if certain features are described in combination with each other, the present invention also relates to an embodiment in which one or more of these features are omitted. Features which have not been explicitly described as being essential may also be omitted. Possible reference numerals used in a claim should not be explained to limit the scope of that claim.

## Claims

1. Strawberry growing tray (100) comprising an upper face (101) and at least one row (120) of cup-shaped recesses (110), as well as a ridge (130) extending along the row and extending upwards with respect to said upper face,
**CHARACTERIZED IN THAT** the ridge (130) extends with constant contour over the entire length of the tray, and has a side face (132) for guiding scissors or cutting knife, offering support in transverse direction;
wherein all ridges have the same orientation.

2. Strawberry growing tray according to claim 1, wherein the ridge (130) has a triangular contour.

3. Strawberry growing tray according to claim 1, wherein the ridge (130) has a sawtooth-shaped contour.

4. Strawberry growing tray according to any of the previous claims, wherein the ridge (130) at its side directed towards the cup-shaped recesses (110) has a slanting side face (131).

5. Strawberry growing tray according to claim 4, wherein the cup-shaped recesses have an upper edge (113) in the upper face (101) of the tray, and wherein the slanting side face (131) of the ridge (130) has a lower edge touching the upper edge (113) of the cup-shaped recesses (110).

6. Strawberry growing tray according to claim 5, wherein the upper edge (113) of the cup-shaped recesses (110) comprises a straight upper edge portion (115) coinciding with a part of the lower edge of the slanting side face (131) of the ridge (130).

7. Strawberry growing tray according to any of the previous claims, wherein said side face (132) is at the ridge's side directed away from the cup-shaped recesses (110) and makes an angle within a range of a few degrees from 90° with the upper face (101).

8. Strawberry growing tray according to claim 7, wherein said side face (132) has a lower edge (134) lying at a distance B from the next adjacent row (120) of the cup-shaped recesses (110).

9. Strawberry growing tray according to any of the previous claims 7-8, wherein said side face (132) has a lower edge (134) bordering to a support face (103) that is part of the upper face (101).

10. Strawberry growing tray according to claim 9, wherein the support face (103) is provided with slanting run-in faces at its longitudinal ends.

11. Strawberry growing tray according to any of the previous claims, wherein the tray has two or more rows (120) of cup-shaped recesses (110), with always for each row a ridge (130) extending along that row and extending upwards with respect to the upper face.

12. Strawberry growing tray according to any of the previous claims, wherein the tray has three or four or more rows (120) of cup-shaped recesses (110), with always for each row a ridge (130) extending along that row and extending upwards with respect to the upper face.

13. Strawberry growing tray according to any of the previous claims, wherein between two cup-shaped recesses (110) in the same row (120) there is always at least one aeration opening (102) in the upper face (101), preferably provided with at least one spoiler (141, 142).

## Patentansprüche

1. Erdbeeranbautablett (100) mit einer Oberseite (101) und mindestens einer Reihe (120) becherförmiger Aussparungen (110) sowie einer Rippe (130), die sich entlang der Reihe erstreckt und sich in Bezug auf die Oberseite nach oben erstreckt,
**DADURCH GEKENNZEICHNET, DASS** die Rippe (130) sich mit konstanter Kontur über die gesamte Länge des Tabletts erstreckt und eine Seitenfläche (132) zur Führung von Scheren oder Schneidmessern aufweist, die in Querrichtung Halt bietet;
wobei alle Rippen die gleiche Ausrichtung haben.

2. Erdbeeranbautablett nach Anspruch 1, wobei die Rippe (130) eine dreieckige Kontur aufweist.

3. Erdbeeranbautablett nach Anspruch 1, wobei die Rippe (130) eine sägezahnförmige Kontur aufweist.

4. Erdbeeranbautablett nach einem der vorhergehenden Ansprüche, wobei die Rippe (130) an seiner den becherförmigen Aussparungen (110) zugewandten Seite eine schräge Seitenfläche (131) aufweist.

5. Erdbeeranbautablett nach Anspruch 4, wobei die becherförmigen Aussparungen eine obere Kante (173) in der Oberseite (101) des Tabletts haben und wobei die schräge Seitenfläche (131) der Rippe (130) eine untere Kante hat, die die obere Kante (113) der becherförmigen Aussparungen (110) berührt.

6. Erdbeeranbautablett nach Anspruch 5, wobei der obere Rand (113) der becherförmigen Aussparungen (110) einen geraden oberen Randabschnitt (115) aufweist, der mit einem Teil des unteren Randes der schrägen Seitenfläche (131) der Rippe (130) zusammenfällt.

7. Erdbeeranbautabiett nach einem der vorhergehenden Ansprüche, wobei die Seitenfläche (132) an der von den becherförmigen Aussparungen (110) abgewandten Seite der Rippe liegt und mit der Oberseite (101) einen Winkel im Bereich von einigen Grad von 90° bildet.

8. Erdbeeranbautablett nach Anspruch 7, wobei die Seitenfläche (132) eine Unterkante (134) aufweist, die in einem Abstand B von der nächsten benachbarten Reihe (120) der becherförmigen Aussparungen (110) liegt.

9. Erdbeeranbautablett nach einem der vorhergehenden Ansprüche 7-8, wobei die Seitenfläche (132) eine untere Kante (134) hat, die an eine Stützfläche (103) angrenzt, die Teil der Oberseite (101) ist.

10. Erdbeeranbautablett nach Anspruch 9, wobei die Stützfläche (103) an ihren Längsenden mit schrägen Einlaufflächen versehen ist.

11. Erdbeeranbautablett nach einem der vorhergehenden Ansprüche, wobei das Tablett zwei oder mehr Reihen (120) becherförmiger Aussparungen (110) aufweist, wobei sich immer für jede Reihe eine Rippe (130) entlang dieser Reihe erstreckt und sich in Bezug auf die Oberseite nach oben erstreckt.

12. Erdbeeranbautablett nach einem der vorhergehenden Ansprüche, wobei das Tablett drei oder vier oder mehr Reihen (120) becherförmiger Aussparungen (110) aufweist, wobei sich immer für jede Reihe eine Rippe (130) entlang dieser Reihe erstreckt und in Bezug auf die Oberseite nach oben erstreckt.

13. Erdbeeranbautablett nach einem der vorhergehenden Ansprüche, wobei zwischen zwei becherförmigen Aussparungen (110) in derselben Reihe (120) immer mindestens eine Belüftungsöffnung (102) in der Oberseite (101) vorhanden ist, die vorzugsweise mit mindestens einem Spoiler (141, 142) versehen ist.

## Revendications

1. Plateau de culture de fraises (100) comprenant une face supérieure (101) et au moins une rangée (120) de cavités en forme de coupes (110), ainsi qu'une arête (130) s'étendant le long de la rangée et s'étendant vers le haut par rapport à ladite face supérieure,
**caractérisé en ce que** l'arête (130) s'étend avec un profil constant sur toute la longueur du plateau, et a une face latérale (132) pour guider des ciseaux ou un couteau de coupe, offrant un support en direction transversale ;
dans lequel toutes les arêtes ont la même orientation.

2. Plateau de culture de fraises selon la revendication 1, dans lequel l'arête (130) a un profil triangulaire.

3. Plateau de culture de fraises selon la revendication 1, dans lequel l'arête (130) a un profil en dents de scie.

4. Plateau de culture de fraises selon l'une quelconque des revendications précédentes, dans lequel l'arête (130), sur son côté orienté vers les cavités en forme de coupes (110), a une face latérale inclinée (131).

5. Plateau de culture de fraises selon la revendication 4, dans lequel les cavités en forme de coupes ont un bord supérieur (113) dans la face supérieure (101) du plateau, et dans lequel la face latérale inclinée (131) de l'arête (130) a un bord inférieur qui touche le bord supérieur (113) des cavités en forme de coupes (110).

6. Plateau de culture de fraises selon la revendication 5, dans lequel le bord supérieur (113) des cavités en forme de coupes (110) comprend une partie de bord supérieur droite (115) qui coïncide avec une partie du bord inférieur de la face latérale inclinée (131) de l'arête (130).

7. Plateau de culture de fraises selon l'une quelconque des revendications précédentes, dans lequel ladite face latérale (132) est du côté de l'arête orienté à l'écart des cavités en forme de coupes (110) et forme un angle compris dans une plage de quelques degrés à partir d'un angle de 90° avec la face supérieure (101).

8. Plateau de culture de fraises selon la revendication 7, dans lequel ladite face latérale (132) a un bord inférieur (134) se trouvant à une distance B de la rangée adjacente suivante (120) des cavités en forme de coupes (110).

9. Plateau de culture de fraises selon l'une quelconque des précédentes revendications 7-8, dans lequel ladite face latérale (132) a un bord inférieur (134) s'arrêtant à une face de support (103) qui fait partie de la face supérieure (101).

10. Plateau de culture de fraises selon la revendication 9, dans lequel la face de support (103) est pourvue de faces d'intégration inclinées à ses extrémités longitudinales.

11. Plateau de culture de fraises selon l'une quelconque des revendications précédentes, dans lequel le plateau comporte deux rangées (120) de cavités en forme de coupes (110) ou plus, avec toujours pour chaque rangée une arête (130) s'étendant le long de cette rangée et s'étendant vers le haut par rapport à la face supérieure.

12. Plateau de culture de fraises selon l'une quelconque des revendications précédentes, dans lequel le plateau comporte trois ou quatre rangées (120) de cavités en forme de coupes (110) ou plus, avec toujours pour chaque rangée une arête (130) s'étendant le long de cette rangée et s'étendant vers le haut par rapport à la face supérieure.

13. Plateau de culture de fraises selon l'une quelconque des revendications précédentes, dans lequel entre deux cavités en forme de coupes (110) d'une même rangée (120), se trouve toujours au moins une ouverture d'aération (102) dans la face supérieure (101), pourvue de préférence d'au moins un déflecteur (141, 142).
